# EUROPEAN PATENT APPLICATION

(11) **EP 1 952 690 A2**
(43) Date of publication of application: **06.08.2008**
(21) Application number: 08100693.4
(22) Date of filing: 21.01.2008
(51) Int. Cl.: A01N 43/90, A01N 53/06, A01N 51/00, A01N 47/40, A01N 47/24, A01N 47/22, A01N 47/02, A01P 3/00, A01P 7/00, A01P 21/00

(54) **Pesticidal mixtures based on triazolopyrimidines and insecticides**

(30) Priority: 31.01.2007 US 887411 P
(71) Applicant: BASF SE, 67056 Ludwigshafen (DE)
(72) Inventor: Voeste, Dirk, 67117, Limburgerhof (DE); Zeller, Alissa, Singapore 268612 (SG); Haden, Egon, 67259, Kleinniedesheim (DE)

(57) **Abstract**

Pesticidal mixtures comprising
a) triazolopyrimidines of the formula I, 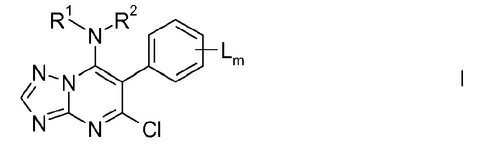 in which the substituents are as defined in the specification,
and
b) at least one insecticidal compound II as defined in the specification,
plant-protecting mixtures, compositions containing the mixtures, and to methods for controlling or preventing fungal infestation or harmful insects or nematodes in plants, and methods of improving the health of plants by applying said mixtures to the plants or the locus thereof.

## Description

The present invention relates to pesticidal mixtures comprising
a) a triazolopyrimidine derivative of the formula I, 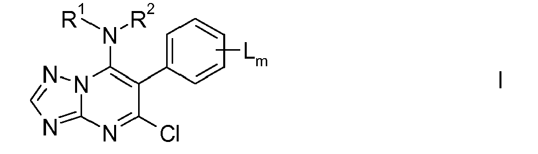 in which the variables are as defined below:
   - R¹: is C₁-C₆-alkyl, C₁-C₆-haloalkyl or C₃-C₆-alkenyl;
   - R²: is hydrogen or one of the groups mentioned for R¹;
   R¹ and R² together may also form a straight-chain or branched C₃-C₈-alkylene chain;
   L is fluorine, chlorine or bromine;
   - m: is 2 or 3;
   and
b) at least one compound II which is selected from the groups
   A.1. Organo(thio)phosphates: acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
   A.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
   A.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;
   A.4. Juvenile hormone mimics: hydroprene, kinoprene, methoprene, fenoxycarb, pyriproxyfen;
   A.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), thiacloprid, thiocyclam, thiosultap-sodium, the thiazol compound of formula (Γ¹) 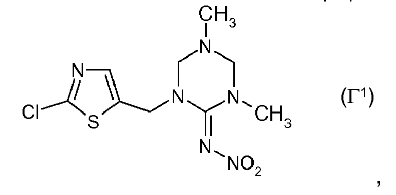
   A.6. GABA gated chloride channel antagonist compounds: chlordane, endosulfan, gamma-HCH (lindane); acetoprole, ethiprole, fipronil, pyrafluprole, pyriprole, vaniliprole, 5-Amino-1-(2,6-dichloro-4-trifluoromethyl-phenyl)-4-trifluoromethanesulfinyl-1 H-pyrazole-3-carbothioic acid amide
   A.7. Chloride channel activators: abamectin, emamectin benzoate, milbemectin, lepimectin;
   A.8. METI I compounds: fenazaquin, fenpyroximate, pyrimidifen, pyridaben, tebufenpyrad, tolfenpyrad, flufenerim, rotenone;
   A.9. METI II and III compounds: acequinocyl, fluacyprim, hydramethylnon;
   A.10. Uncouplers of oxidative phosphorylation: chlorfenapyr, DNOC;
   A.11. Inhibitors of oxidative phosphorylation: azocyclotin, cyhexatin, diafenthiuron, fenbutatin oxide, propargite, tetradifon;
   A.12. Moulting disruptors: cyromazine, chromafenozide, halofenozide, methoxyfenozide, tebufenozide;
   A.13. Synergists: piperonyl butoxide, tribufos;
   A.14. Sodium channel blocker compounds: indoxacarb, metaflumizone;
   A.15. Fumigants: methyl bromide, chloropicrin sulfuryl fluoride;
   A.16. Selective feeding blockers: crylotie, pymetrozine, flonicamid;
   A.17. Mite growth inhibitors: clofentezine, hexythiazox, etoxazole;
   A.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;
   A.19. Lipid biosynthesis inhibitors: spirodiclofen, spiromesifen, spirotetramat;
   A.20. octapaminergic agonsits: amitraz;
   A.21. ryanodine receptor modulators: flubendiamide;
   A.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic;
   A.23. N-R'-2,2-dihalo-1-R"cyclo-propanecarboxamide-2-(2,6-dichloro-α,α,α-tri-fluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R'" is methyl or ethyl;
   A.24. Malononitrile compounds: CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H;
   A.25. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis.

The present invention also relates to plant-protecting mixtures and to a method of improving the health of plants by applying said mixtures to the plants or the locus thereof.

Furthermore, the invention relates to a method of controlling fungi and/or improving the health of plants, which comprises treating a site, for example a plant or a plant propagation material, that is infested or liable to be infested by fungi with the pesticides present in a inventive mixture in any desired sequence or simultaneously, that is, jointly or separately.

Furthermore, the invention relates to a method of controlling harmful insects or nematodes, which comprises treating a site, for example a plant or a plant propagation material, that is infested or liable to be infested by said pests with the pesticides present in a inventive mixture in any desired sequence or simultaneously, that is, jointly or separately.

One typical problem arising in the field of pest control lies in the need to reduce the dosage rates of the active ingredient in order to reduce or avoid unfavorable environmental or toxicological effects whilst still allowing effective pest and pathogen control.

Another problem encountered concerns the need to have available pest control agents which are effective against a broad spectrum of pests and pathogens.

Another problem underlying the present invention is the desire for compositions that improve plants, a process which is commonly and hereinafter referred to as "plant health". For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

Another difficulty in relation to the use of pesticides is that the repeated and exclusive application of an individual pesticidal compound leads in many cases to a rapid selection of pests or pathogens that have developed natural or adapted resistance against the active compound in question.

It was therefore an object of the present invention to provide pesticidal mixtures which solve the problems outlined above.

The combating of harmful phytopathogenic fungi is not the only problem the farmer has to face. Also harmful insects and other pests can cause a great damage to crops and other plants. An efficient combination of fungicidal and insecticidal activity is desirable to overcome this problem. Thus, it is a further object of the present invention to provide a mixture that, on the one hand, has good fungicidal activity, and, on the other hand, good insecticidal activity, resulting in a broader pesticidal spectrum of action.

We have found that this object is in part or in whole achieved by the combination of active compounds defined in the outset.

Especially, it has been found that a mixture of at least a compound of formula I and at least a compound II as defined in the outset show markedly enhanced action against plant pathogens compared to the control rates that are possible with the individual compounds and/or is suitable for improving the health of plants when applied to plants, parts of plants, seeds, or at their locus of growth.

It has been found that the action of the inventive mixtures, e.g. of the mixture of a compound of formula I and a compound II as defined in the outset, goes far beyond the fungicidal and insecticidal action of the active compounds present in the mixture alone. It has been shown that the mixtures exhibit plant health effects in the frame of the present invention. The term plant health comprises various sorts of improvements of plants that are not connected to the control of pests.

The compounds of the formula I, their preparation and their action against harmful fungi are known from the literature (EP-A 550 113; WO 98/46607; WO 98/46608).

Fungicidal mixtures of 5-chlorotriazolopyrimidines with fungicidally active compounds are known in a general manner from EP-A 988 790 and US 6 268 371.

The commercially available compounds II of groups A.1 to A.25 may be found in The Pesticide Manual, 13th Edition, British Crop Protection Council (2003) among other publications, such as http://www.hclrss.demon.co.uk/index.html.

5-Amino-1-(2,6-dichloro-4-trifluoromethyl-phenyl)-4-trifluoromethanesulfinyl-1H-pyrazole-3-carbothioic acid amide and its preparation have been described in WO 98/28279. Lepimectin is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Preparation methods for neonicotionids similar to AKD-1022 have been desscribed by Zhang, A. et al. in J.Neurochemistry, 75(3), 2000. Cyflumetofen and its preparation have been described in WO 04/080180. The malononitrile compounds CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H have been described in WO 05/63694.

In the definitions of the symbols given for the formulae above, collective terms were used which generally represent the following substituents:
halogen: fluorine, chlorine, bromine and iodine;
alkyl: saturated straight-chain or branched hydrocarbon radicals having 1 to 4, 6, 8 or 10 carbon atoms, for example C₁-C₆-alkyl, such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl;
haloalkyl: straight-chain or branched alkyl groups having 1 to 2, 4 or 6 carbon atoms (as mentioned above), where some or all of the hydrogen atoms in these groups may be replaced by halogen atoms as mentioned above: in particular C₁-C₂-haloalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl or 1,1,1-trifluoroprop-2-yl.

Suitable for the object of the invention are in particular those compounds of the formula I in which R¹ and R² together form a straight-chain or branched C₃-C₈-alkylene chain. These compounds correspond to formula I.1, 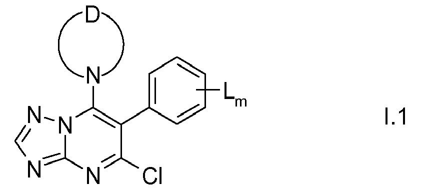 where D is a straight-chain or branched C₃-C₈-alkylene chain, in particular a branched C₅-alkylene chain, such as 3-methylpentylene.

Preference is likewise given to compounds of the formula I in which the substituted 6-phenyl group is a 2,4,6-trifluorophenyl ring. These compounds correspond to formula I.2, 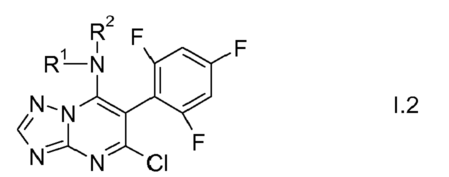 where R¹ and R² are as defined for formula I.

In addition, the invention also preferably provides the following embodiment of the compounds of the formula I:

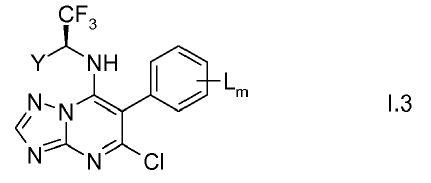

In formula I.3, Y is hydrogen or methyl.

Particular preference is given to the following compounds of the formula I:

| No. | R¹ | R² | Lₘ |
|---|---|---|---|
| I-1 | -CH₂CH₂CH(CH₃)CH₂CH₂- | | 2,4,6-F₃ |
| I-2 | -CH₂CH₂CH(CH₃)CH₂CH₂- | | 2-F,6-Cl |
| I-3 | (S) CH(CH₃)CF₃ | H | 2,4,6-F₃ |

The compound I-1, 5-chloro-7-(4-methylpiperidin-1-yl)-6-(2,4,6-trifluorophenyl)-[1,2,4]triazolo[1,5-a]pyrimidine is especially preferred for use in the invention.

A preferred embodiment of the invention relates to mixtures of at least a compound of formula I, especially one of the list of preferred compounds above, with at least a compound II from the group of the carbamates as defined in the outset. Carbamates are preferably selected from carbofuran, carbosulfan, and thiodicarb.

Another preferred embodiment of the invention relates to mixtures of at least a compound of formula I, especially one of the list above, with at least a compound II from the group of the pyrethroids as defined in the outset. Pyrethroids are preferably selected from bifenthrin, cyfluthrin, cypermethrin, alpha-cypermethrin, and tefluthrin.

Another preferred embodiment of the invention relates to mixtures of at least a compound of formula I, especially one of the list above, with at least a compound II from the group of the nicotinic receptor agonists/antagonists compounds as defined in the outset. Nicotinic receptor agonists/antagonists compounds are preferably selected from acetamiprid, clothianidin, dinotefuran, imidacloprid, spinosad, thiamethoxam, and thiacloprid.

Another preferred embodiment of the invention relates to mixtures of at least a compound of formula I, especially one of the list above, with at least a compound II from the group of the nicotinic receptor agonists/antagonists compounds as defined in the outset. Nicotinic receptor agonists/antagonists compounds is more preferably clothianidin.

Another preferred embodiment of the invention relates to mixtures of at least a compound of formula I, especially one of the list above, with at least a compound II from the group of the GABA gated chloride channel antagonist compounds as defined in the outset. A preferred GABA gated chloride channel antagonist compound is fipronil.

Preferred embodiments are the combinations listed in table A, where in each case one row of table A corresponds to a pesticidal combination comprising the particular compound of the formula I mentioned (component a) and one active compound II (component b) of the groups mentioned, this active compound II preferably being selected from the preferred embodiments defined above.

**Table A**

| No. | Component a | Component b |
|---|---|---|
| A-1 | Tab. 1, I-1 | an active compound II from group A.2 |
| A-2 | Tab. 1, I-1 | an active compound II from group A.3 |
| A-3 | Tab. 1, I-1 | an active compound II from group A.5 |
| A-4 | Tab. 1, I-1 | an active compound II from group A.6 |
| A-5 | Tab. 1, I-2 | an active compound II from group A.2 |
| A-6 | Tab. 1, I-2 | an active compound II from group A.3 |
| A-7 | Tab. 1, I-2 | an active compound II from group A.5 |
| A-8 | Tab. 1, I-2 | an active compound II from group A.6 |
| A-9 | Tab. 1, I-3 | an active compound II from group A.2 |
| A-10 | Tab. 1, I-3 | an active compound II from group A.3 |
| A-11 | Tab. 1, I-3 | an active compound II from group A.5 |
| A-12 | Tab. 1, I-3 | an active compound II from group A.6 |

The compounds of formula I and compounds II are capable of forming salts or adducts with inorganic or organic acids or with metal ions.

Examples of inorganic acids are hydrohalic acids, such as hydrogen fluoride, hydrogen chloride, hydrogen bromide and hydrogen iodide, sulfuric acid, phosphoric acid and nitric acid.

Suitable organic acids are, for example, formic acid, carbonic acid and alkanoic acids, such as acetic acid, trifluoroacetic acid, trichloroacetic acid and propionic acid, and also glycolic acid, lactic acid, succinic acid, citric acid, benzoic acid, cinnamic acid, oxalic acid, p-toluenesulfonic acid, salicylic acid, p-aminosalicylic acid, 2-phenoxybenzoic acid or 2-acetoxybenzoic acid.

Suitable metal ions are in particular the ions of the elements of the first to eighth transition group, especially chromium, manganese, iron, cobalt, nickel, copper, zinc, and additionally those of the second main group, especially calcium and magnesium, and of the third and fourth main group, in particular aluminum, tin and lead. If appropriate, the metals can be present in the different valencies that they can assume.

The active compounds mentioned above can also be employed in the form of their agriculturally compatible salts. These are usually the alkali metal or alkaline earth metal salts, such as sodium, potassium or calcium salts.

The compounds of formula I can be present in various crystal modifications whose biological activities may differ. They also form part of the subject matter of the present invention.

In a preferred embodiment of the invention, mixtures of a compound of formula I and an active compound II are used. Under certain conditions, it may be advantageous to combine an triazolopyrimidine with two or more active compounds II. In addition, mixtures of two or more compounds I with one or more active compounds II may also be suitable.

When preparing the mixtures, preference is given to using the pure active compounds which, if required, may be mixed with further active compounds against harmful fungi or other pests, such as insects, arachnids or nematodes, or else herbicidal or growth-regulating active compounds or fertilizers as further active components.

Preferred further insecticides are those mentioned as component b in the outset, more preferred are the preferred compounds II as mentioned above.

Preferred further fungicides are those selected from the group consisting of
- strobilurins, such as azoxystrobin, dimoxystrobin, enestroburin, fluoxastrobin, kresoxim-methyl, methominostrobin, orysastrobin, picoxystrobin, pyraclostrobin, pyribencarb, trifloxystrobin, 2-(ortho-((2,5-dimethylphenyl-oxymethylen)phenyl)-3-methoxy-acrylsauremethylester;
- carbonic acid amides, such as anilides: benalaxyl, benalaxyl-M, benodanil, bixafen, boscalid, carboxin, carpropamid, diclocymet, fenfuram, fenhexamid, flutolanil, furametpyr, isotianil, kiralaxyl, mandipropamid, mepronil, metalaxyl, ofurace, oxadixyl, oxycarboxin, penthiopyrad, silthiofam, thifluzamide, tiadinil, N-(3',4'-di-chloro-5-fluoro-biphenyl-2-yl)-3-difluoromethyl-1-methyl-1H-pyrazole-4-carboxylic acid amide, N-(2-(1,3-dimethyl-butyl)-phenyl)-1,3-dimethyl-5-fluoro-1H-pyrazole-4-carboxylic acid amide, N-(4'-chloro-3',5-difluoro-biphenyl-2-yl)-3-difluoromethyl-1-methyl-1 H-pyrazole-4-carboxylic acid amide, N-(4'-chloro-3',5-difluoro-biphenyl-2-yl)-3-trifluoromethyl-1-methyl-1 H-pyrazole-4-carboxylic acid amide, N-(3',4'-dichloro-5-fluoro-biphenyl-2-yl)-3-trifluoromethyl-1-methyl-1H-pyrazole-4-carboxylic acid amide, N-(3',5-difluoro-4'-methyl-biphenyl-2-yl)-3-difluoromethyl-1-methyl-1H-pyrazole-4-carboxylic acid amide, N-(3',5-difluoro-4'-methyl-biphenyl-2-yl)-3-trifluoromethyl-1-methyl-1 H-pyrazole-4-carboxylic acid amide, N-(2-bicyclopropyl-2-yl-phenyl)-3-difluoromethyl-1-methyl-1H-pyrazole-4-carboxylic acid amide, N-(cis-2-bicyclopropyl-2-yl-phenyl)-3-difluoromethyl-1-methyl-1H-pyrazole-4-carboxylic acid amide, N-(trans-2-bicyclopropyl-2-yl-phenyl)-3-difluoromethyl-1-methyl-1H-pyrazole-4-carboxylic acid amide;
   carbonic acid morpholides: dimethomorph, flumorph; benzoic acid amides: flumetover, fluopicolide, fluopyram, zoxamide;
- azoles, such as triazoles: azaconazole, bitertanol, bromuconazole, cyproconazole, difenoconazole, diniconazole, epoxiconazole, fenbuconazole, fluquinconazole, flusilazole, flutriafol, hexaconazol, imibenconazole, ipconazole, metconazol, myclobutanil, oxpoconazol, paclobutrazol, penconazole, propiconazole, prothioconazole, simeconazole, tebuconazole, tetraconazole, triadimefon, triadimenol, triticonazole;
   imidazoles: cyazofamid, imazalil, pefurazoate, prochloraz, triflumizole; benzimidazoles: benomyl, carbendazim, fuberidazole, thiabendazole; others: ethaboxam, etridiazole, hymexazole, 1-(4-chloro-phenyl)-1-(propin-2-yloxy)-3-(4-(3,4-dimethoxy-phenyl)-isoxazol-5-yl)-propan-2-one;
- nitrogen containing heterocycles, such as pyridines: fluazinam, pyrifenox, 3-[5-(4-chloro-phenyl)-2,3-dimethyl-isoxazolidin-3-yl]-pyridine; pyrimidines: bupirimate, cyprodinil, diflumetorim, fenarimol, ferimzone, mepanipyrim, nitrapyrin, nuarimol, pyrimethanil;
   pyrroles: fenpiclonil, fludioxonil;
   morpholines: aldimorph, dodemorph, fenpropimorph, tridemorph;
   dicarboximides: fluoroimid, iprodione, procymidone, vinclozolin;
   non-aromatic five-membered rings: famoxadone, fenamidone, octhilinone, probenazole;
   others: acibenzolar-S-methyl, amisulbrom, anilazin, blasticidin-S, captafol, captan, chinomethionat, dazomet, debacarb, diclomezine, fenoxanil, fenpropidin, folpet, piperalin, proquinazid, pyroquilon, quinoxyfen, triazoxid, tricyclazole, tricyclazole, triforine, 5-chloro-7-(4-methyl-piperidin-1-yl)-6-(2,4,6-trifluoro-phenyl)-[1,2,4]triazolo[1,5-a]pyrimidine, 2-butoxy-6-iodo-3-propyl-chromen-4-one
- carbamates and dithiocarbamates, such as: dithiocarbamates: ferbam, mancozeb, maneb, metam, metiram, propineb, thiram, zineb, ziram;
   carbamates: diethofencarb, flubenthiavalicarb, iprovalicarb, propamocarb, valiphenal, N-(1-(1-(4-cyanophenyl)ethanesulfonyl)-but-2-yl) carbamic acid-(4-fluorophenyl) ester;
- guanidines, such as: dodine, guazatine, iminoctadine;
- antibiotics: kasugamycin, polyoxine, streptomycin, validamycin A;
- organometal compounds: fentin salts (e.g. fentin acetate, fentin chloride, fentin hydroxide);
- sulphur containing heterocycles, such as: dithianon, isoprothiolane;
- organophosphorous compounds, such as: edifenphos, fosetyl, fosetyl-aluminium, iprobenfos, pyrazophos, tolclofos-methyl;
- organochloro compounds, such as: chlorothalonil, dichlofluanid, dichlorophen, flusulfamide, hexachlorbenzene, pencycuron, phthalide, quintozene, thiophanate-methyl, tolylfluanid;
- inorganic compounds, such as: sulphur, phosphorous acid (H₃PO₃) and its salts, copper salts, e. g. bordeaux mixture, copper acetate, copper hydroxide, copper oxychloride, basic copper sulphate;
- nitrophenyl derivatives, such as: binapacryl, dicloran, dinobuton, dinocap, tecnazen;
- growth retardants: prohexadione and its salts, trinexapac-ethyl, chlormequat, mepiquat-chloride and diflufenzopyr;
- others: bronopol, cyflufenamid, cymoxanil, diphenylamin, metrafenone, mildiomycin, spiroxamine, tolylfluanid, N-(cyclopropylmethoxyimino-(6-difluoromethoxy-2,3-difluoro-phenyl)-methyl)-2-phenyl acetamide;.

More preferred further fungicides are those selected from the group consisting of
- azoles: benomyl, difenoconazole, epoxiconazole, fluquinconazole, flutriafol, hymexazole, imazalil, metconazole, prothioconazole, tebuconazole; thiabendazole, triadimenol, prochloraz, triticonazole, carbendazim;
- strobilurins: azoxystrobin, kresoxim-methyl, orysastrobin, pyraclostrobin, trifloxystrobin;
- carboxamides, such as boscalid, carboxin, metalaxyl, oxadixyl, dimethomorph; silthiofam, mandipropamid;
- heterocylic compounds, such as fludioxonil; captan, dazomet, pyrimethanil; iprodione;
- carbamates, such as mancozeb, maneb, metiram, thiram;
- other active compounds, selected from inorganic active compounds: sulphur, Bordeaux mixture, copper acetate, copper hydroxide, copper oxychloride, basic copper sulfate; others: guazatine, streptomycin.

Another preferred embodiments are the combinations listed in table B, where in each case one row of table B corresponds to a pesticidal combination comprising the particular compound of the formula I mentioned (component a) and the particular compound II (component b). Each of these binary combinations may additionally contain one or more further, especially one insecticide or fungicide as mentioned above.

**Table B**

| No. | Component a | Component b |
|---|---|---|
| B-1 | Tab. 1, I-1 | carbofuran |
| B-2 | Tab. 1, I-1 | carbosulfan |
| B-3 | Tab. 1, I-1 | thiodicarb |
| B-4 | Tab. 1, I-1 | bifenthrin |
| B-5 | Tab. 1, I-1 | cyfluthrin |
| B-6 | Tab. 1, I-1 | cypermethrin |
| B-7 | Tab. 1, I-1 | α-cypermethrin |
| B-8 | Tab. 1, I-1 | tefluthrin |
| B-9 | Tab. 1, I-1 | acetamiprid |
| B-10 | Tab. 1, I-1 | clothianidin |
| B-11 | Tab. 1, I-1 | dinotefuran |
| B-12 | Tab. 1, I-1 | imidacloprid |
| B-13 | Tab. 1, I-1 | spinosad |
| B-14 | Tab. 1, I-1 | thiamethoxam |
| B-15 | Tab. 1, I-1 | thiacloprid |
| B-16 | Tab. 1, I-1 | fipronil |
| B-17 | Tab. 1, I-2 | carbofuran |
| B-18 | Tab. 1, I-2 | carbosulfan |
| B-19 | Tab. 1, I-2 | thiodicarb |
| B-20 | Tab. 1, I-2 | bifenthrin |
| B-21 | Tab. 1, I-2 | cyfluthrin |
| B-22 | Tab. 1, I-2 | cypermethrin |
| B-23 | Tab. 1, I-2 | α-cypermethrin |
| B-24 | Tab. 1, I-2 | tefluthrin |
| B-25 | Tab. 1, I-2 | acetamiprid |
| B-26 | Tab. 1, I-2 | clothianidin |
| B-27 | Tab. 1, I-2 | dinotefuran |
| B-28 | Tab. 1, I-2 | imidacloprid |
| B-29 | Tab. 1, I-2 | spinosad |
| B-30 | Tab. 1, I-2 | thiamethoxam |
| B-31 | Tab. 1, I-2 | thiacloprid |
| B-32 | Tab. 1, I-2 | fipronil |
| B-33 | Tab. 1, I-3 | carbofuran |
| B-34 | Tab. 1, I-3 | carbosulfan |
| B-35 | Tab. 1, I-3 | thiodicarb |
| B-36 | Tab. 1, I-3 | bifenthrin |
| B-37 | Tab. 1, I-3 | cyfluthrin |
| B-38 | Tab. 1, I-3 | cypermethrin |
| B-39 | Tab. 1, I-3 | α-cypermethrin |
| B-40 | Tab. 1, I-3 | tefluthrin |
| B-41 | Tab. 1, I-3 | acetamiprid |
| B-42 | Tab. 1, I-3 | clothianidin |
| B-43 | Tab. 1, I-3 | dinotefuran |
| B-44 | Tab. 1, I-3 | imidacloprid |
| B-45 | Tab. 1, I-3 | spinosad |
| B-46 | Tab. 1, I-3 | thiamethoxam |
| B-47 | Tab. 1, I-3 | thiacloprid |
| B-48 | Tab. 1, I-3 | fipronil |

In another preferred embodiment the mixture comprises two active ingredients only. The respective preferred embodiments are in accordance with the above-mentioned ones.

In another preferred embodiment the mixture comprises three active ingredients only. More prefered is any one of combinations B-1 to B-48, which may additionally contain a further active compound, especially a further fungicide. The respective preferred embodiments are in accordance with the above-mentioned ones.

In one embodiment, the mixtures according to the invention are used for combating harmful fungi and harmful insects or nematodes.

In a further embodiment, the mixtures according to the invention are used for combating harmful fungi.

In a further embodiment, the mixtures according to the invention are used for combating harmful insects or nematodes.

In a further embodiment, the mixtures according to the invention comprise the compounds of formula I and compounds II in a synergistic effective amount.

In a further embodiment, the mixtures according to the invention comprise the compounds of formula I and compounds II in a synergistic effective amount and are used for combating harmful insects or nematodes.

In a further embodiment, the mixtures according to the invention are used for a method of controlling fungi and/or improving the health of plants, which comprises treating a site, for example a plant or a plant propagation material, that is infested or liable to be infested by fungi with at least a compound of formula I, and at least a compound II, in any desired sequence or simultaneously, that is, jointly or separately.

In a further embodiment, the mixtures according to the invention are used for a method of controlling harmful insects or nematodes, which comprises treating a site, for example a plant or a plant propagation material, that is infested or liable to be infested by fungi with at least a compound of formula I, and at least a compound II, in any desired sequence or simultaneously, that is, jointly or separately.

In a further embodiment, the mixtures according to the invention are used for a method of improving the health of plants, which comprises treating a site, for example a plant or a plant propagation material, that is infested or liable to be infested by fungi with at least a compound of formula I, and at least a compound II, in any desired sequence or simultaneously, that is, jointly or separately.

In another embodiment of the method the application at least a compound of formula I, and at least a compound II, can be made in the absence of pest pressure.

In a further embodiment, the mixtures according to the invention comprise the compounds of formula I and compounds II in a synergistic effective amount and are used for improving the health of plants. Such method can be applied under pest pressure or in the absence of pest pressure.

In a further preferred embodiment, the mixtures according to the invention are used for for foliar application in living crops of plants, for soil applications prior to sowing or planting, including overall soil treatment and furrow applications, as well as, in particular, for dressing applications on plant propagation material. The latter term embraces seeds of all kinds (fruit, tubers, grains), cuttings, cut shoots and the like. One particular field of application is the treatment of all kinds of seeds.

The mixtures according to the invention are especially important for controlling a large number of fungi and insects or nematodes on a variety of crop plants such as wheat, corn, rye, barley, oats, sorghum, rice, maize, grass, bananas, cotton, soy beans, coffee, sugar cane, grapevines, fruit species, ornamentals and vegetables such as cucumbers, beans, drybeans, tomatoes, potatoes, lettuce, cucurbits, cabbage, carrots, cruciferous, sunflowers and cucurbits, and on the seeds of these plants or on pasture and on seeds of pasture. In a special embodiment the mixtures according to the present invention are applied on soybeans. In another preferred embodiment the mixtures according the present invention are applied on seeds. In a particular embodiment the mixtures according to the present invention are applied on seeds of soybeans.

The compounds I can be used as a synergist for a large number of different active compounds II. The simultaneous, that is joint or separate, application of at least one compound of formula I with an active compound II increases the fungicidal activity and/or the activity for increasing the health of plants in a superadditive manner.

Specifically, the compounds of formula I, and the mixtures are suitable for controlling each of the following harmful fungi:
- Alternaria species on vegetables, oilseed rape, sugar beet, cereals, fruit and rice, such as, e.g. A. solani or A. alternata on potatoes and tomatoes,;
- Aphanomyces species on sugar beet and vegetables,
- Ascochyta species on cereals and vegetables, e.g. Ascochyta tritici on wheat,
- Bipolaris and Drechslera species on corn, cereals, rice and lawns, such as, e.g. D. maydis on corn,
- Blumeria graminis (powdery mildew) on cereals, e.g. wheat or barley,
- Botrytis cinerea (gray mold) on strawberries, vegetables, flowers, wheat and grapes,
- Bremia lactucae on lettuce,
- Cercospora species on corn, soybeans, rice and sugar beet, e.g. Cercospora sojina or Cercospora kikuchii on soybeans,
- Cladosporium herbarum on wheat,
- Cochliobolus species on corn, cereals, rice, such as, e.g. Cochliobolus sativus on cereals, Cochliobolus miyabeanus on rice,
- Colletotricum species on soybeans and cotton, e.g. Colletotrichum truncatum on soybeans,
- Corynespora cassiicola on soybeans,
- Dematophora necatrix on soybeans,
- Diaporthe phaseolorum on soybeans,
- Drechslera species, Pyrenophora species on corn, cereals, rice and lawns, such as, e.g. D. teres on barley or D. tritici-repentis on wheat,
- Esca on grapevines, caused by Phaeoacremonium chlamydosporium, Ph. Aleophilum and Formitipora punctata (syn. Phellinus punctatus);
- Elsinoe ampelina on wheat,
- Entyloma oryzae on rice,
- Epicoccum spp. on wheat,
- Exserohilum species on corn,
- Erysiphe cichoracearum and Sphaerotheca fuliginea on cucumbers,
- Fusarium and Verticillium species on various plants, such as, e.g. F. graminearum or F. culmorum on cereals or F. oxysporum on a multitude of plants, such as, e.g. tomatoes, and Fusarium solani on soybeans,
- Gaeumanomyces graminis on cereals, e.g. wheat of barley,
- Glomerella cingulata on grapes and other crops,
- Gibberella species on cereals and rice (for example Gibberella fujikuroi on rice);
- Grainstaining complex on rice;
- Guignardia budwelli on grapes,
- Helminthosporium species on corn and rice,
- Isariopsis clavispora on grapes,
- Macrophomina phaseolina on soybeans,
- Michrodochium nivale on cereals;
- Microsphaera diffusa on soybeans,
- Mycosphaerella species on cereals, bananas and groundnuts, such as, e.g., M. graminicola on wheat or M. fijiensis on bananas;
- Peronospora species on cabbage and bulbous plants, such as, e.g., P. brassicae on cabbage, P. destructor on onions, or P. manshurica on soybeans,
- Phakopsara pachyrhizi and Phakopsara meibomiae on soybeans,
- Phialophora gregata on soybeans,
- Phomopsis species on sunflowers, soybeans (e.g. P. phaseoli) and grapes (e.g. P. viticola),
- Phytophthora species on various plants, such as, e.g. P. capsici on bell pepper, P. megasperma on soybeans, and P. infestans on potatoes and tomatoes,
- Plasmopara viticola on grapevines,
- Podosphaera leucotricha on apples,
- Pseudocercosporella herpotrichoides on cereals (wheat or barley),
- Pseudoperonospora on various plants, such as, e.g. P. cubensis on cucumber or P. humili on hops,
- Pseudopezicula tracheiphilai on grapes,
- Puccinia species on various plants, such as, e.g. P. triticina, P. striformins, P. hordei or P.graminis on cereals (wheat or barley) or P. asparagi on asparagus,
- Pyricularia oryzae, Corticium sasakii, Sarocladium oryzae, S.attenuatum, Entyloma oryzae on rice,
- Pyrenophora tritici-repentis on wheat or Pyrenophora teres on barley,
- Pyricularia grisea on lawns and cereals,
- Pythium spp. on lawns, rice, corn, wheat, cotton, oilseed rape, sunflowers, sugar beet, vegetables and other plants, such as, e.g. P. ultiumum on various plants, P. aphanidermatum on lawns;
- Ramularia collo-cygni (physiological leaf spots) on barley,
- Rhizoctonia species on cotton, rice, potatoes, lawns, corn, oilseed rape, potatoes, sugar beet, vegetables and on various plants, such as, e.g. R. solani on beet and various plants, and Rhizoctonia cerealis on wheat or barley,
- Rhynchosporium secalis on barley, rye and triticale,
- Sclerotinia species on oilseed rape and sunflowers, and e.g. S. sclerotiorum or S. rolfsii on soybeans,
- Septoria glycines on soybeans,
- Septoria tritici and Stagonospora nodorum on wheat,
- Erysiphe (syn. Uncinula) necator on grapevines,
- Setospaeria species on corn and lawns,
- Sphacelotheca reilinia on corn,
- Stagonospora nodorum on wheat,
- Thievaliopsis species on soybeans and cotton,
- Tilletia species on cereals,
- Typhula incarnata on wheat or barley,
- Ustilago species on cereals, corn and sugar cane, such as, e.g. U. maydis on corn,
- Venturia species (scab) on apples and pears, such as, for example, V. inaequalis on apples.

They are also suitable for controlling the following harmful insects from the order of the
- lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,
- beetles (Coleoptera), for example Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, lps typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus and Sitophilus granaria,
- dipterans (Diptera), for example Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea and Tipula paludosa,
- thrips (Thysanoptera), e.g. Frankliniella fusca, Frankliniella occidentalis, Frankliniella tritici, Scirtothrips citri, Thrips oryzae, Thrips palmi and Thrips tabaci,
- hymenopterans (Hymenoptera), e.g. Athalia rosae, Atta cephalotes, Atta sexdens, Atta texana, Hoplocampa minuta, Hoplocampa testudinea, Monomorium pharaonis, Solenopsis geminata and Solenopsis invicta,
- heteropterans (Heteroptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis and Thyanta perditor,
- homopterans (Homoptera), e.g. Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, and Viteus vitifolii.
- termites (Isoptera), e.g. Calotermes flavicollis, Leucotermes flavipes, Reticulitermes lucifugus und Termes natalensis,
- orthopterans (Orthoptera), e.g. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus and Tachycines asynamorus,
- Arachnoidea, such as arachnids (Acarina), e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis.

They are furthermore suitable for controlling the following harmful nematodes, especially plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species; Sting nematodes, Belonolaimus longicaudatus and other Belonolaimus species; Pine nematodes, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus neglectus, Pratylenchus penetrans, Pratylenchus curvitatus, Pratylenchus goodeyi and other Pratylenchus species; Burrowing nematodes, Radopholus similis and other Radopholus species; Reniform nematodes, Rotylenchus robustus and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species; Dagger nematodes, Xiphinema species; and other plant parasitic nematode species.

In particular, the inventive mixtures are suitable for combating pests of the orders Coleoptera, Lepidoptera, Thysanoptera, Homoptera, Isoptera, and Orthoptera.

They are also suitable for controlling the following plant parasitic nematodes such as Meloidogyne, Globodera,Heterodera, Radopholus, Rotylenchulus, Pratylenchus and other genera.

Suitable targets for seed treatment are various crop seeds, fruit species, vegetables, spices and ornamental seed, for example corn/maize (sweet and field), durum wheat, soybean, wheat, barley, oats, rye, triticale, bananas, rice, cotton, sunflower, potatoes, pasture, alfalfa, grasses, turf, sorghum, rapeseed, Brassica spp., sugar beet, eggplants, tomato, lettuce, iceberg lettuce, pepper, cucumber, squash, melon, bean, dry-beans, peas, leek, garlic, onion, cabbage, carrot, tuber such as sugar cane, tobacco, coffee, turf and forage, cruciferous, cucurbits, grapevines, pepper, fodder beet, oil seed rape, pansy, impatiens, petunia and geranium.

The term seed treatment comprises all suitable seed treatment techniques known in the art, such as, but not limited to, seed dressing, seed coating, seed dusting, seed soaking, seed film coating, seed multilayer coating, seed encrusting, seed dripping, and seed pelleting.

The active ingredient mixtures according to the invention are especially advantageous for seed treatment of oil seed rape, wheat, corn, rye, barley, oats, sorghum, sunflowers, rice, maize, turf and forage, cotton, sugar beet, beans, peas, soybeans, ornamentals, and vegetables such as cucurbits, tomatoes, eggplant, potatoes, pepper, lettuce, cabbage, carrots, cruciferous.

Especially preferred is the seed treatment of oil seed rape, wheat, beans, corn, soybeans, cotton, sorghum, sugar beet, rice, vegetables, and ornamentals.

The mixtures according to the invention are most preferably used for the seed treatment of oil seed rape.

In addition, mixtures according to the invention may also be used in crops which tolerate the action of herbicides or fungicides or insecticides owing to breeding, including genetic engineering methods.

For example, mixtures according to the invention can be employed in transgenic crops which are resistant to herbicides from the group consisting of the sulfonylureas, imidazolinones, glufosinate-ammonium or glyphosate-isopropylammonium and analogous active substances (see for example, EP-A 242 236, EP-A 242 246) (WO 92/00377) (EP-A 257 993, US 5,013,659) or in transgenic crop plants, for example cotton, with the capability of producing Bacillus thuringiensis toxins (Bt toxins) which make the plants resistant to certain pests (EP-A 142 924, EP-A 193 259).

Furthermore, mixtures according to the invention can be used also for the treatment of plants which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The compounds of formula I and compounds II and optionally the further active ingredient(s) can be applied simultaneously, that is jointly or separately, or in succession; the sequence, in the case of separate application, generally not having any effect on the result of the control measures.

The compounds of formula I and compounds II are usually applied in an effective amount, preferably in a weight ratio of from 100:1 to 1:100, in particular from 20:1 to 1:20, preferably from 10:1 to 1:10.

The compounds of formula I and the further fungicide are usually applied in an effective amount, preferably in a weight ratio of from 1000:1 to 1:1000.

Depending on the desired effect, the application rates of the mixtures according to the invention are, especially in the case of areas under agricultural cultivation, from 5 to 2 000 g/ha, preferably from 50 to 1 500 g/ha, in particular from 50 to 750 g/ha.

Here, the application rates of the compounds of formula I are from 1 g to 1 kg/ha, preferably from 10 to 900 g/ha, in particular from 20 to 750 g/ha.

Correspondingly, the application rates of the compounds II are from 1 g to 1 kg/ha, preferably from 10 to 750 g/ha, in particular from 20 to 500 g/ha.

Correspondingly, the application rates of the further fungicide are from 1 g to 1 kg/ha, preferably from 5 to 900 g/ha, in particular from 10 to 750 g/ha.

In the treatment of seed, the application rates of the mixture according to the invention are generally from 3 kg : 30 g a.i./100 kg, 100 g : 1 g a.i./100 kg, 30 g : 3 kg a.i./100 kg or 1 g : 100g a.i./100 kg. For some specific crop seeds, such as lettuce or onions, the rates can be higher.

A further embodiment of the present invention is directed to the seeds being treated with the mixture according to the present invention.

The novel active ingredient mixtures have very advantageous curative, preventive and systemic fungicidal properties for protecting cultivated plants. As has been mentioned, said active ingredient mixtures can be used to inhibit or destroy the pathogens that occur on plants or parts of plants (fruit, blossoms, leaves, stems, tubers, roots) of different crops or useful plants, while at the same time those parts of plants which grow later are also protected from attack by such pathogens. Active ingredient mixtures have the special advantage of being highly active against diseases in the soil that mostly occur in the early stages of plant development.

In the control of phytopathogenic harmful fungi and/or harmful insects and/or nematodes, especially in the control of phytopathogenic harmful fungi and/or harmful insects, the separate or joint application of the compounds of formula I and compounds II and optionally of the further active ingredient or of a mixture according to the invention is carried out by treating the seeds, the plants or the soils before or after sowing of the plants or before or after emergence of the plants.

The active compound(s), and the mixtures according to the invention can be prepared, for example, in the form of directly sprayable solutions, powders and suspensions or in the form of highly concentrated aqueous, oily or other suspensions, dispersions, emulsions, oil dispersions, pastes, dusts, compositions for spreading or granules, and be applied by spraying, atomizing, dusting, broadcasting or watering or colored suspension, solution, emulsion to be applied as such or as water based slurry with seed treatment machinery. The use form depends on the particular purpose; in each case, it should ensure a distribution of the mixture according to the invention, which is as fine and uniform as possible.

The active compound(s), and the mixtures can be converted into the customary formulations, for example solutions, emulsions, suspensions, dusts, powders, pastes and granules. The use form depends on the particular intended purpose; in each case, it should ensure a fine and even distribution of the compound according to the invention.

The formulations are prepared in a known manner (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8), for example by extending the active compound with auxiliaries suitable for the formulation of agrochemicals, such as solvents and/or carriers, if desired emulsifiers, surfactants and dispersants, preservatives, antifoaming agents, anti-freezing agents, for seed treatment formulation also optionally colorants and/or binders and/or gelling agents.

Examples of suitable solvents are water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used.

Suitable emulsifiers are nonionic and anionic emulsifiers (for example polyoxyethylene fatty alcohol ethers, alkylsulfonates and arylsulfonates).

Examples of dispersants are lignin-sulfite waste liquors and methylcellulose.

Suitable surfactants used are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, highly polar solvents, for example dimethyl sulfoxide, N-methylpyrrolidone or water.

Also anti-freezing agents such as glycerin, ethylene glycol, propylene glycol and bactericides such as can be added to the formulation.

Suitable antifoaming agents are for example antifoaming agents based on silicon or magnesium stearate.

Suitable preservatives are for example dichlorophen und enzylalkoholhemiformal.

Seed Treatment formulations may additionally comprise binders and optionally colorants.

Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

An Example of a gelling agent is carrageen (Satiagel^{®}).

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers.

Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

In general, the formulations comprise from 0.01 to 95% by weight, preferably from 0.1 to 90% by weight, of the active compound(s). In this case, the active compound(s) are employed in a purity of from 90% to 100% by weight, preferably 95% to 100% by weight(according to NMR spectrum).

For seed treatment purposes, respective formulations can be diluted 2-10 fold leading to concentrations in the ready to use preparations of 0,01 to 60% by weight active compound by weight, preferably 0,1 to 40% by weight.

The compound(s) of formula I, and the mixtures can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; they are intended to ensure in each case the finest possible distribution of the active compound(s) according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. However, it is also possible to prepare concentrates composed of active substance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.01 to 1% per weight.

The active compound(s) may also be used successfully in the ultra-low-volume process (ULV), it being possible to apply formulations comprising over 95% by weight of active compound, or even to apply the active compound without additives.

The following are examples of formulations:

### 1. Products for dilution with water for foliar applications. For seed treatment purposes, such products may be applied to the seed diluted or undiluted.

A) Water-soluble concentrates (SL, LS)
   10 parts by weight of the active compound(s) are dissolved in 90 parts by weight of water or a water-soluble solvent. As an alternative, wetters or other auxiliaries are added. The active compound(s) dissolves upon dilution with water, whereby a formulation with 10 % (w/w) of active compound(s) is obtained.
B) Dispersible concentrates (DC)
   20 parts by weight of the active compound(s) are dissolved in 70 parts by weight of cyclohexanone with addition of 10 parts by weight of a dispersant, for example polyvinylpyrrolidone. Dilution with water gives a dispersion, whereby a formulation with 20% (w/w) of active compound(s) is obtained.
C) Emulsifiable concentrates (EC)
   15 parts by weight of the active compound(s) are dissolved in 7 parts by weight of xylene with addition of calcium dodecylbenzenesulfonate and castor oil ethoxylate (in each case 5 parts by weight). Dilution with water gives an emulsion, whereby a formulation with 15% (w/w) of active compound(s) is obtained.
D) Emulsions (EW, EO, ES)
   25 parts by weight of the active compound(s) are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion. Dilution with water gives an emulsion, whereby a formulation with 25% (w/w) of active compound(s) is obtained.
E) Suspensions (SC, OD, FS)
   In an agitated ball mill, 20 parts by weight of the active compound(s) are comminuted with addition of 10 parts by weight of dispersants, wetters and 70 parts by weight of water or of an organic solvent to give a fine active compound(s) suspension. Dilution with water gives a stable suspension of the active compound(s), whereby a formulation with 20% (w/w) of active compound(s) is obtained.
F) Water-dispersible granules and water-soluble granules (WG, SG)
   50 parts by weight of the active compound(s) are ground finely with addition of 50 parts by weight of dispersants and wetters and made as water-dispersible or water-soluble granules by means of technical appliances (for example extrusion, spray tower, fluidized bed). Dilution with water gives a stable dispersion or solution of the active compound(s), whereby a formulation with 50% (w/w) of active compound(s) is obtained.
G) Water-dispersible powders and water-soluble powders (WP, SP, SS, WS)
   75 parts by weight of the active compound(s) are ground in a rotor-stator mill with addition of 25 parts by weight of dispersants, wetters and silica gel. Dilution with water gives a stable dispersion or solution of the active compound(s), whereby a formulation with 75% (w/w) of active compound(s) is obtained.

### Gel-Formulation (GF)

In an agitated ball mill, 20 parts by weight of the active compound(s) are comminuted with addition of 10 parts by weight of dispersants, 1 part by weight of a gelling agent wetters and 70 parts by weight of water or of an organic solvent to give a fine active compound(s) suspension. Dilution with water gives a stable suspension of the active compound(s), whereby a formulation with 20% (w/w) of active compound(s) is obtained.

### 2. Products to be applied undiluted for foliar applications. For seed treatment purposes, such products may be applied to the seed diluted.

I) Dustable powders (DP, DS)
   5 parts by weight of the active compound(s) are ground finely and mixed intimately with 95 parts by weight of finely divided kaolin. This gives a dustable product having 5% (w/w) of active compound(s)
J) Granules (GR, FG, GG, MG)
   0.5 part by weight of the active compound(s) is ground finely and associated with 95.5 parts by weightof carriers, whereby a formulation with 0.5% (w/w) of active compound(s) is obtained. Current methods are extrusion, spray-drying or the fluidized bed. This gives granules to be applied undiluted for foliar use.
K) ULV solutions (UL)
   10 parts by weight of the active compound(s) are dissolved in 90 parts by weight of an organic solvent, for example xylene. This gives a product having 10% (w/w) of active compound(s), which is applied undiluted for foliar use.

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulation can be applied to the seed diluted or undiluted. Application to the seeds is carried out before sowing, either directly on the seeds.

In a preferred embodiment a FS formulation is used for seed treatment. Typcially, a FS formulation may comprise 1-800 g/l of active ingredient, 1-200 g/l Surfactant, 0 to 200 g/l antifreezing agent, 0 to 400 g/l of binder, 0 to 200 g/l of a pigment and up to 1 liter of a solvent, preferably water.

The active compound concentrations in the ready-to-use preparations can be varied within relatively wide ranges. In general, they are from 0.0001 to 10%, preferably from 0.01 to 1%.

The active compounds may also be used successfully in the ultra-low-volume process (ULV), it being possible to apply formulations comprising over 95% by weight of active compound, or even to apply the active compound without additives.

Various types of oils, wetters, adjuvants, herbicides, fungicides, other pesticides, or bactericides may be added to the active compounds, if appropriate not until immediately prior to use (tank mix). These agents can be admixed with the agents according to the invention in a weight ratio of 1:100 to 100:1, preferably 1:10 to 10:1.

Suitable adjuvants in this sense are in particular: organically modified polysiloxanes, for example Break Thru S 240^{®}; alcohol alkoxylates, for example Atplus 245^{®}, Atplus MBA 1303^{®}, Plurafac LF 300^{®} and Lutensol ON 30^{®}; EO/PO block polymers, for example Pluronic RPE 2035^{®} and Genapol B^{®}; alcohol ethoxylates, for example Lutensol XP 80^{®}; and sodium dioctylsulfosuccinate, for example Leophen RA^{®}.

The testing of the mixtures according to the present invention shows that said mixtures are effective in controlling fungi and/or insects and/or nematodes, and improving plant health.

## Claims

1. Pesticidal mixtures comprising
a) at least one triazolopyrimidine of the formula I, 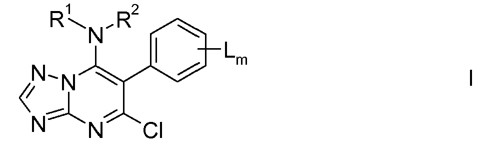 in which the variables are as defined below:
R¹ is C₁-C₆-alkyl, C₁-C₆-haloalkyl or C₃-C₆-alkenyl;
R² is hydrogen or one of the groups mentioned for R¹;
R¹ and R² together may also form a straight-chain or branched C₃-C₈-alkylene chain;
L is fluorine, chlorine or bromine;
m is 2 or 3;
and
b) at least one compound II which is selected from the groups
A.1. Organo(thio)phosphates: acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
A.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
A.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;
A.4. Juvenile hormone mimics: hydroprene, kinoprene, methoprene, fenoxycarb, pyriproxyfen;
A.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), thiacloprid, thiocyclam, thiosultap-sodium, the thiazol compound of formula (Γ¹) 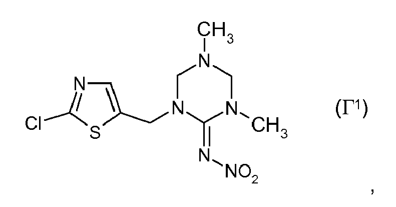
A.6. GABA gated chloride channel antagonist compounds: chlordane, endosulfan, gamma-HCH (lindane); acetoprole, ethiprole, fipronil, pyrafluprole, pyriprole, vaniliprole, 5-Amino-1-(2,6-dichloro-4-trifluoromethylphenyl)-4-trifluoromethanesulfinyl-1 H-pyrazole-3-carbothioic acid amide A.7. Chloride channel activators: abamectin, emamectin benzoate, milbemectin, lepimectin;
A.8. METI I compounds: fenazaquin, fenpyroximate, pyrimidifen, pyridaben, tebufenpyrad, tolfenpyrad, flufenerim, rotenone;
A.9. METI II and III compounds: acequinocyl, fluacyprim, hydramethylnon;
A.10. Uncouplers of oxidative phosphorylation: chlorfenapyr, DNOC;
A.11. Inhibitors of oxidative phosphorylation: azocyclotin, cyhexatin, diafenthiuron, fenbutatin oxide, propargite, tetradifon;
A.12. Moulting disruptors: cyromazine, chromafenozide, halofenozide, methoxyfenozide, tebufenozide;
A.13. Synergists: piperonyl butoxide, tribufos;
A.14. Sodium channel blocker compounds: indoxacarb, metaflumizone;
A.15. Fumigants: methyl bromide, chloropicrin sulfuryl fluoride;
A.16. Selective feeding blockers: crylotie, pymetrozine, flonicamid;
A.17. Mite growth inhibitors: clofentezine, hexythiazox, etoxazole;
A.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;
A.19. Lipid biosynthesis inhibitors: spirodiclofen, spiromesifen, spirotetramat;
A.20. octapaminergic agonsits: amitraz;
A.21. ryanodine receptor modulators: flubendiamide;
A.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic;
A.23. N-R'-2,2-dihalo-1-R"cyclo-propanecarboxamide-2-(2,6-dichloro-α,α,α-tri-fluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R'" is methyl or ethyl;
A.24. Malononitrile compounds: CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H;
A.25. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis.

2. Pesticidal mixtures according to claim 1, wherein the compound of formula I has the following meanings:
R¹ and R² together form a straight-chain or branched C₃-C₈-alkylene chain.

3. Pesticidal mixtures according to claim 1 or 2, wherein the compound of formula I is 5-chloro-7-(4-methylpiperidin-1-yl)-6-(2,4,6-trifluorophenyl)-[1,2,4]triazolo[1,5-a]pyrimidine.

4. Pesticidal mixtures according to any one of claims 1 to 3, wherein the compound II is selected from the group consisting of carbamates according to claim 1.

5. Pesticidal mixtures according to claim 4, wherein the compound II is selected from the group consisting of carbofuran, carbosulfan, and thiodicarb.

6. Pesticidal mixtures according to any one of claims 1 to 3, wherein the compound II is selected from the group consisting of pyrethroids according to claim 1.

7. Pesticidal mixtures according to claim 6, wherein the compound II is selected from the group consisting of bifenthrin, cyfluthrin, cypermethrin, alpha-cypermethrin, and tefluthrin.

8. Pesticidal mixtures according to any one of claims 1 to 3, wherein the compound II is selected from the group consisting of nicotinic receptor agonists/antagonists compounds according to claim 1.

9. Pesticidal mixtures according to claim 8, wherein the compound II is selected from the group consisting of acetamiprid, clothianidin, dinotefuran, imidacloprid, spinosad, thiamethoxam, and thiacloprid.

10. Pesticidal mixtures according to claim 8 or 9, wherein the compound II is clothianidin.

11. Pesticidal mixtures according to any one of claims 1 to 3, wherein the compound II is selected from the group consisting of GABA gated chloride channel antagonist compounds according to claim 1.

12. Pesticidal mixtures according to claim 11, wherein the compound II is fipronil.

13. Pesticidal mixtures according to any one of claims 1 to 12 comprising a compound of formula I and a compound II in a synergistically effective amount.

14. Pesticidal mixtures according to any one of claims 1 to 13 comprising a compound of formula I and a compound II in a weight ratio of from 100: 1 to 1:100.

15. Pesticidal mixtures according to any one of claims 1 to 14 further comprising a fungicide.

16. A method of improving the health of plants, which comprises applying in any desired sequence, simultaneously, that is, jointly or separately, or in succession, effective amounts of a mixture as claimed in any one of claims 1 to 15.

17. A method of controlling or preventing fungal infestation in plants, parts of plants, seeds, or at their locus of growth, which comprises applying in any desired sequence, simultaneously, that is, jointly or separately, or in succession, synergistically effective amounts of a mixture as claimed in any one of claims 1 to 15.

18. A method of controlling or preventing harmful insects or nematodes in plants, parts of plants, seeds, or at their locus of growth, which comprises applying in any desired sequence, simultaneously, that is, jointly or separately, or in succession, synergistically effective amounts of a mixture as claimed in any one of claims 1 to 15.

19. A method as claimed in claims 16, 17 or 18, wherein the mixture as claimed in claims 1 to 14 is applied in an amount of from 0.1 g/ha to 2000 g/ha.

20. A method of protection of seeds comprising contacting the seeds before sowing and/or after pregermination with a mixture as defined in claims 1 to 15 in synergistically effective amounts.

21. A method as claimed in claim 19 wherein the mixture as defined in claims 1 to 15 is applied in an amount of from 0.1 g to 5 kg per 100 kg of seeds.

22. Plant propagation material treated with the mixtures as defined in claims 1 to 15.

23. The plant propagation material of claim 22, wherein seeds are the propagation material.

24. Seed, comprising the mixture as claimed in claims 1 to 15 in an amount of from 0.1 g to 5 kg per 100 kg of seeds.

25. Pesticidal composition, comprising a liquid or solid carrier and a mixture according to any of claims 1 to 15.

26. A process for preparing a composition as claimed in claim 25 by extending the active compounds of formula I and compounds II with solvents and/or carriers.
